(19) Europäisches Patentamt
European Patent Office
Office européen des brevets

(11) **EP 3 241 008 B1**

(12) **FASCICULE DE BREVET EUROPEEN**

(45) Date de publication et mention
de la délivrance du brevet:
**28.08.2019 Bulletin 2019/35**

(21) Numéro de dépôt: **15848131.7**

(22) Date de dépôt: **22.12.2015**

(51) Int Cl.:
*G01M 3/32* *(2006.01)*        *G01M 3/28* *(2006.01)*
*G01M 3/26* *(2006.01)*

(86) Numéro de dépôt international:
**PCT/FR2015/000237**

(87) Numéro de publication internationale:
**WO 2016/107993 (07.07.2016 Gazette 2016/27)**

(54) **DISPOSITIF DE VÉRIFICATION DE L' ÉTANCHÉITÉ**

VORRICHTUNG ZUR ÜBERPRÜFUNG DER DICHTHEIT

DEVICE FOR VERIFYING LEAK TIGHTNESS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**
Etats d'extension désignés:
**BA ME**
Etats de validation désignés:
**MA MD**

(30) Priorité: **30.12.2014  FR 1403030**

(43) Date de publication de la demande:
**08.11.2017  Bulletin 2017/45**

(73) Titulaire: **ISP Aquitaine
33708 Mérignac Cedex (FR)**

(72) Inventeur: **DONGIEUX, Alain
33708 Merignac Cedex (FR)**

(74) Mandataire: **Célanie, Christian
Cabinet Célanie
5 Avenue de Saint Cloud
B.P. 214
78002 Versailles Cedex (FR)**

(56) Documents cités:
**EP-A1- 1 643 230      WO-A1-2010/134622
FR-A1- 2 628 529      FR-A5- 2 136 747
US-A- 4 462 249       US-B1- 6 182 501**

EP 3 241 008 B1

**Description**

Le secteur technique de la présente invention est celui des appareils électroniques de mesure et de détection.

Certains appareils tels que des cartes électroniques spécifiques sont prévus pour fonctionner dans un environnement sous une pression déterminée. Une carte électronique d'acquisition et de traitement des données représentatives des images capturées par une caméra numérique peut par exemple se trouver dans une enceinte étanche sous pression forcée.

Il apparaît ainsi le besoin de vérifier l'étanchéité de l'enceinte pour s'assurer du bon fonctionnement de l'appareil maintenu sous une pression déterminée. Les appareils de vérification de l'étanchéité comprennent généralement un capteur mesurant la pression dans l'enceinte pour détecter après plusieurs mesures successives significatives une variation de la pression.

Un problème est cependant qu'une fuite très faible causera une dégradation très progressive de la pression dans l'enceinte. La détection d'une telle fuite nécessite alors d'effectuer de nombreuses mesures pendant une longue période de temps s'étendant par exemple sur 24 heures. Les tests d'étanchéité nécessitent d'autant plus de moyens que le nombre d'enceintes est important.

Le document EP-1643230 enseigne le contrôle d'étanchéité d'une canalisation enterrée dans lequel la pression P(t) est mesurée au niveau d'un branchement 51 avec la canalisation et dans lequel la température ambiante Ta(t) est mesurée au voisinage des parties non enterrées de la canalisation. D1 se base sur le principe que la température interne Ti(t) peut s'exprimer comme une fonction affine de la température ambiante, à un déphasage $\varphi$ près et que la fuite de pression s'exprimant de façon linéaire en fonction du temps, sous la forme 5xt, peut être déterminée en comparant la pression modélisée et la pression mesurée. Toutefois la fuite exprimée sous la forme 5xt et la modélisation de la pression sous la forme Pmodel (t) = a x Ta(t) + b nécessite un grand nombre de mesures pendant un intervalle de temps important.

Le document FR-2628529 enseigne un procédé et un système de contrôle de l'étanchéité d'une enceinte surveillant l'évolution de la pression interne par contrôle de la pression différentielle entre la pression interne et une pression de référence.

Le document Fr-2136747 enseigne un procédé pour vérifier l'étanchéité d'une enceinte à l'aide d'un débitmètre disposé en parallèle d'un moyen d'obturation autorisant des débits importants uniquement et associé à un dispositif de mise en pression.

Le document WO-2010/134622 enseigne, d'après l'abrégé, une pompe 12 de mise en pression d'un espace 2A dont la pression est mesurée par un capteur de pression.

Le document US-6182501 enseigne une méthode de détection d'une fuite par évaluation d'une pression différentielle entre un réservoir de travail et un réservoir maître.

Le document US-4462249 enseigne un système de détection d'une fuite par mise à pression réduite d'un espace autour d'un réservoir contenant un liquide grâce à un moyen acoustique d'écoute pour détecter un bouillonnement résultant du passage du fluide par une perforation dans le réservoir.

La présente invention a pour but de pallier les inconvénients de l'art antérieur en fournissant un dispositif de vérification de l'étanchéité permettant de détecter rapidement une fuite même faible dans une enceinte étanche.

Cet objectif est atteint grâce à un dispositif de vérification de l'étanchéité d'une enceinte sous une pression déterminée mise en communication de façon étanche avec un espace de mesure fermé agencé dans le dispositif de vérification qui comprend un module électronique de traitement et un premier capteur de pression disposé dans ledit espace de mesure et transmettant au module électronique de traitement, par une première liaison de communication, un premier signal (M6) représentatif de la pression dans l'enceinte, le module électronique de traitement comprenant au moins des moyens de calcul et des moyens de mémorisation reliés à des moyens de communication, caractérisé en ce qu'il comprend au moins un module de précision coopérant avec le module électronique de traitement de façon à s'affranchir des variations en température du milieu environnant lors de l'exécution d'opérations de traitement d'au moins ledit premier signal (M6) représentatif de la pression dans l'enceinte et de détection d'une fuite dans l'enceinte, le module de précision comprenant au moins un capteur de température transmettant au module de traitement, par une deuxième liaison de communication, un deuxième signal (M9) représentatif de la température environnante, le module de traitement en coopération avec le module de précision réalisant une première mesure de pression simultanément à une première mesure de température et séparés d'un intervalle de temps déterminé d'une deuxième mesure de pression simultanément à une deuxième mesure de température associée, le module de traitement en coopération avec le module de précision réalisant le traitement suivant :

$$F = ((P_2 + (T_2 - T_1) \cdot (P_2 + K_1) / (0,5 \cdot T_1 + 0,5 \cdot T_2 + K_2)) - P_1) / \Delta t$$

où

F correspond à la valeur de la fuite exprimée en mbar/24h,

$P_1$ correspond à la première pression mesurée en mbar,

$P_2$ correspond à la deuxième pression mesurée en mbar,

$T_1$ correspond à la première température mesurée en degrés Celsius au moment de la mesure de la première pression,

$T_2$ correspond à la deuxième température mesurée en degrés Celsius au moment de la mesure de la deuxième pression,

$K_1$ et $K_2$ sont des constantes et

$\Delta t$ correspond à l'intervalle de temps entre les deux mesures de pression exprimé en secondes,

la fuite étant détectée en cas de dépassement d'un seuil (S25) de fuite déterminé stocké en mémoire.

Selon une particularité de l'invention, le module de précision comprend au moins une chambre et un deuxième capteur de pression installé dans cette chambre et transmettant un troisième signal (M21) au module de traitement, la chambre étant reliée par au moins une première vanne audit espace de mesure de façon à pouvoir être mis à la même pression que ladite enceinte lorsque ladite première vanne est en position d'ouverture, le module de traitement en coopération avec le module de précision réalisant au moins une mesure différentielle des pressions mesurées par les premier et deuxième capteurs de pression lorsque ladite première vanne est en position de fermeture pour détecter la fuite en cas de dépassement d'un seuil de pression différentielle déterminée stocké en mémoire.

Selon une autre particularité de l'invention, le module de précision comprend une réserve de gaz sous pression reliée à un détendeur en communication avec une deuxième vanne de liaison avec ledit espace de mesure et un troisième capteur de pression en amont de cette deuxième vanne, la deuxième vanne étant commandée en position fermée lorsque la pression à tester dans l'enceinte est atteinte.

Selon une autre particularité de l'invention, le module de précision comprend un débitmètre disposé en travers d'un passage réalisé dans l'espace de mesure fournissant au moins un signal (M33) représentatif de l'établissement d'une pression dans l'enceinte.

Selon encore une autre particularité de l'invention, le dispositif comprend un programme (P55) de conditionnement de l'enceinte réalisant une intégration du signal (M33) fourni par le débitmètre pour calculer l'injection d'un volume déterminé injecté lors d'un balayage dans l'enceinte qui comprend une vanne d'évacuation mise alors en position ouverte.

Selon une autre particularité de l'invention, le programme (P55) de conditionnement comprend une fonction de traitement du premier signal (M6) fourni par le premier capteur et de vérification de la fluidité de la circulation lors du balayage.

Selon une autre particularité de l'invention, le dispositif se présente sous la forme d'une mallette portative.

Un tout premier avantage est qu'une fuite même faible dans l'enceinte peut être détectée très rapidement en quelques secondes.

Un autre avantage du dispositif de détection de fuite selon la présente invention est qu'il peut être fabriqué de façon compacte et se présenter sous la forme d'une mallette portative.

Un autre avantage de la présente invention est que le dispositif de détection de fuite est particulièrement précis et permet la détection de fuites de l'ordre du mbar/24h.

D'autres caractéristiques, avantages et détails de l'invention seront mieux compris à la lecture du complément de description qui va suivre de modes de réalisation donnés à titre d'exemple en relation avec des dessins sur lesquels :

- la figure 1 représente une vue schématique d'un dispositif de vérification de l'étanchéité selon l'invention ;
- les figures 2 et 3 représentent chacune les étapes d'un programme de vérification de l'étanchéité.

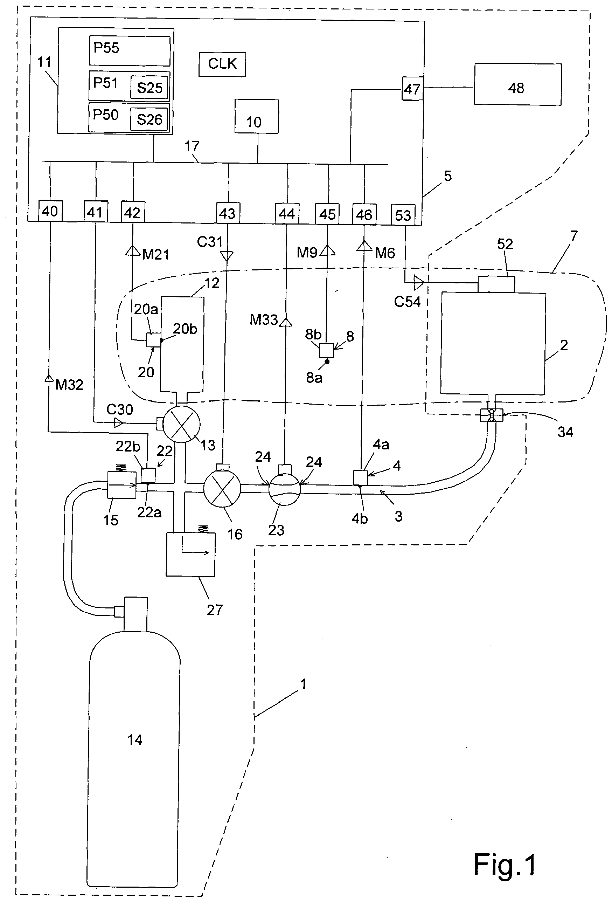

L'invention va à présent être décrite avec davantage de détails. La figure 1 représente une vue schématique d'un dispositif de vérification 1 de l'étanchéité. Le dispositif de vérification 1 représenté ici schématiquement se présente par exemple sous la forme d'une valise portative ou d'un chariot.

Le dispositif de vérification 1 comprend un module électronique de traitement 5 relié par des ports 40-46 d'entrée et de sortie à des capteurs 4, 8, 20, 22 et 23 et des actionneurs 13, 16 et 52. Le dispositif de vérification 1 comprend notamment un capteur de température 8, des capteurs de pression 4, 20 et 22 et un capteur de débit 23. Le dispositif de vérification 1 comprend également des vannes 13 et 16 pouvant être commandées par un signal de commande C30 ou C31 ou manuellement.

Le dispositif de vérification 1 comprend un composant d'alimentation en énergie électrique non représenté tel qu'une batterie ou des piles ou encore un transformateur relié à un réseau électrique. Le composant d'alimentation alimente de façon connue le module électronique de traitement 5 et les étages de puissance des actionneurs 13 et 16.

L'enceinte 2 comprend un orifice d'évacuation contrôlé par une vanne 52 qui sera décrit par la suite.

L'enceinte 2 est reliée par un connecteur étanche 34 à un espace de mesure 3. Cet espace de mesure 3 se présente par exemple sous la forme d'une canalisation. La canalisation est fermée par la vanne 16. L'espace de mesure 3 est bien-entendu fermé lorsque cette vanne 16 est en position de fermeture.

L'espace de mesure 3 peut être ouvert lorsque la première vanne 16 est en position d'ouverture et ainsi être mis en communication avec un circuit de mise en pression ou avec une chambre 12. La vanne 16 d'ouverture ou de fermeture de l'espace de mesure 3 peut être commandée par un signal de commande C31 généré par le module de traitement 5 via son port 43.

L'espace de mesure 3 comprend un capteur de débit 23 installé dans un passage 24 de l'espace de mesure 3 et générant un signal M33 représentatif du débit mesuré et transmis au module de traitement 5 via son port 44.

Un capteur de pression 4 fournit un signal M6 représentatif de la pression dans l'espace 3 de mesure et transmis au module de traitement 5 via son port 46. Ce capteur 4 comprend une sonde 4b disposée dans l'espace de mesure 3 et reliée à une interface 4a générant le signal M6 représentatif de la pression et en communication avec le port 46.

Lorsque l'espace de mesure 3 est connecté de façon étanche à l'enceinte 2, le capteur de la pression 4 disposé dans l'espace de mesure 3 fournit un signal représentatif de la pression dans l'enceinte 2.

Le circuit de mise en pression comprend une réserve 14 de gaz sous pression reliée à un détendeur 15 d'alimentation en gaz sous pression. Le capteur de pression 22 comprend une sonde 22a disposée en sortie du détendeur 15 et reliée à une interface 22b qui génère un signal M32 représentatif de la pression en sortie du détendeur 15. Ce signal M32 est transmis au module électronique de traitement 5 via son port 40.

Ce signal M32 est par exemple lu et traité par un programme réalisant un affichage de la pression sur un écran de contrôle. La pression en sortie du détendeur peut ainsi facilement être réglée par un utilisateur.

Le dispositif de vérification de l'étanchéité 1 comprend également une soupape 27 de sécurité reliée en sortie du détendeur 15 et s'ouvrant automatiquement par sécurité au-delà d'un seuil de pression de sécurité.

La sortie du détendeur est reliée par ailleurs à l'entrée de la vanne 16 de fermeture de l'espace de mesure 3.

Une chambre 12 peut être fermée ou ouverte par une vanne 13 commandée par un signal de commande C30 transmis par le module électronique de traitement 5 via son port 41. La sortie de cette vanne 13 est reliée à l'entrée de la vanne 16 de fermeture de l'espace de mesure 3. Lorsque la vanne 13 en entrée de la chambre 12 et la vanne 16 en entrée de l'espace de mesure 3 sont toutes les deux en position d'ouverture, la chambre 12 et l'espace de mesure 3 sont alors mis en communication. La chambre 12 et l'espace de mesure 3 peuvent ainsi être mis à la même pression.

La chambre 12 est équipée d'un capteur de pression 20 comprenant une sonde 20b disposée dans la chambre 12. Cette sonde 20b est reliée à une interface 20a fournissant un signal M21 représentatif de la pression dans la chambre 12 et transmis au module de traitement 5 via son port 42.

La chambre 12 est disposée dans le même environnement 7 que l'enceinte 2. La chambre 12 et l'enceinte 2 sont ainsi disposées dans un même environnement extérieur à une température déterminée. La chambre 12 et l'enceinte 2 peuvent également être réalisées dans un matériau présentant les mêmes caractéristiques de conductivité thermique.

Le capteur de température 8 transmet un signal M9 représentatif de la température du milieu environnant au module de traitement 5 via son port 45. Le capteur de température 8 est disposé dans le même environnement que l'enceinte 2.

Le capteur de température comprend une sonde 8a reliée à une interface 8b fournissant le signal M9 représentatif de la température du milieu environnant où est disposée l'enceinte 2. L'environnement 7 est par exemple rempli par de l'air ou est rempli par un mélange gazeux particulier en environnement contrôlé.

Le module de traitement 5 comprend des ports 40-46 de branchement des lignes de communication reliées aux interfaces des capteurs ou des actionneurs. Ces ports 40-46 sont reliées chacun à un bus 17 de liaison relié par ailleurs à un composant de calcul 10 et à un composant de mémorisation 11. Le bus permet un échange de données, une synchronisation et un contrôle des composants. Le bus permet notamment un contrôle des lectures et écritures en mémoire. Une horloge CLK est par exemple reliée à chacun des composants. L'horloge CLK permet un fonctionnement synchronisé du module électronique de traitement 5.

Le bus 17 est par ailleurs relié à un port de communication 47 avec des composants d'interface homme-machine 48 tels que des boutons, des manettes, des capteurs tactiles, des écrans d'affichage ou des haut-parleurs.

Le composant 11 de mémorisation comprend différents programmes dont des programmes P50 et P51 de traitement des données pour la vérification de l'étanchéité ou la détection d'une fuite en fonction de seuils mémorisés S25 et S26 de détection. Le composant de mémorisation comprend également un programme P55 de conditionnement de l'enceinte.

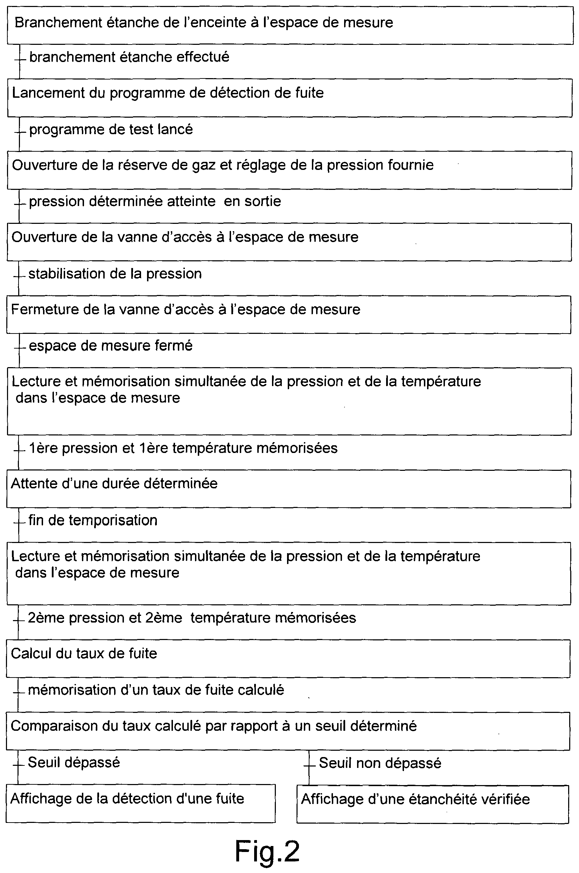

Un premier exemple de programme de détection d'une fuite va maintenant être décrit en relation avec la figure 2.

Avant le branchement du dispositif de vérification 1 à l'enceinte 2, les vannes 13 et 16 sont disposées en position de fermeture. L'enceinte peut alors être branchée de façon étanche à l'espace de mesure au moyen d'un connecteur étanche 34. Ce connecteur 34 permet par exemple une fermeture automatique de l'enceinte lorsque le dispositif de vérification est débranché. Le dispositif de vérification 1 permet notamment une mise à une pression déterminée de l'enceinte 2.

Après le branchement étanche de l'enceinte 2 à l'espace de mesure 3, on exécute un programme de vérification de l'étanchéité P51 stocké en mémoire 11. Le lancement de ce programme est par exemple réalisé par un signal de démarrage généré par l'interface 48. Ce signal de démarrage est par exemple généré par l'appui sur un bouton de démarrage ou l'appui sur une zone de démarrage d'un écran tactile.

Le lancement du programme de vérification est par exemple signifié à un utilisateur par un message affiché sur un écran ou par un bit sonore ou encore par l'illumination d'un témoin lumineux.

La mise en pression peut ensuite être effectuée en agissant sur le détendeur 15. Le détendeur 15 est ouvert jusqu'à ce qu'une pression déterminée soit atteinte en sortie du détendeur 15. Le capteur de pression 22 en sortie du détendeur permet un contrôle de la pression d'alimentation.

Le signal représentatif de la pression M32 en sortie du détendeur est par exemple comparé à une pression déterminée mémorisée. Lorsque la pression d'alimentation déterminée est atteinte, le dispositif de vérification émet un signal représentatif de cette pression, tel qu'un signal sonore, un signal lumineux ou bien affiche un message sur un écran.

L'actionnement du détendeur peut être réalisé par exemple manuellement.

Lorsque la pression d'alimentation est atteinte en sortie du détendeur 15, une ouverture de la vanne 16 d'accès à l'espace de mesure 3 est commandée. Cette ouverture est par exemple réalisée automatiquement par un signal de commande C31 d'ouverture transmis par le module de traitement 5 à une interface de commande de la vanne 16.

Chaque vanne comprend par exemple un étage électronique de commande d'un étage de puissance actionnant un élément moteur pour positionner la vanne en position d'ouverture ou en position de fermeture.

Le capteur de débit 23 installé dans un passage 24 de l'espace de mesure 3 fournit un signal M33 représentatif d'un débit déterminé. Lorsque le débit détecté est nul, la pression dans l'espace de mesure 3 est alors stabilisée.

Après la stabilisation de la pression dans l'espace de mesure, la vanne 16 d'accès à l'espace de mesure 3 est fermée. La fermeture est par exemple réalisée automatiquement par un signal de commande C31 de la vanne 16 en position fermée.

Après la fermeture de l'espace de mesure 3, une première lecture simultanée d'une pression dans l'espace de mesure et d'une température associée est réalisée. Les données représentatives de cette première pression et de cette première température sont stockées en mémoire.

Une étape de temporisation d'une durée déterminée est ensuite exécutée. Cette temporisation a par exemple une durée comprise entre 10 ms et 1000 ms.

Après la temporisation une deuxième lecture simultanée d'une pression dans l'espace de mesure 3 et d'une température associée est réalisée. Les données représentatives de cette deuxième pression et de cette deuxième température sont stockées en mémoire.

Une étape de calcul d'un taux de fuite est ensuite réalisée. Le taux de fuite est déterminé suivant la formule suivante :

$$F = (((P_2 + (T_2 - T_1) \cdot (P_2 + K_1) / (0,5 \cdot T_1 + 0,5 \cdot T_2 + K_2)) - P_1) / \Delta t$$

où

F correspond à la valeur de la fuite exprimée en mbar/24h,
$P_1$ correspond à la première pression mesurée en mbar,
$P_2$ correspond à la deuxième pression mesurée en mbar,
$T_1$ correspond à la première température mesurée en degrés Celsius au moment de la mesure de la première pression,
$T_2$ correspond à la deuxième température mesurée en degrés Celsius au moment de la mesure de la deuxième pression,
$K_1$ et $K_2$ sont des constantes et
$\Delta t$ correspond à l'intervalle de temps entre les deux mesures de pression exprimé en secondes.
$K_1$ et $K_2$ sont par exemple prises égales à 273.

Après le stockage en mémoire 11 de ce taux de fuite, une étape de comparaison du taux calculé avec à un seuil mémorisé S25 déterminé est exécutée.

Ce seuil S25 est par exemple compris entre 0,1 mbar/24h et 1 mbar/24h. En cas de dépassement du seuil S25 le programme P51 se termine par la transmission d'un message de détection d'une fuite.

En cas de non dépassement du seuil S25 mémorisé, le programme P51 se termine par la transmission d'un message de vérification de l'étanchéité. Le programme P51 comprend alors avantageusement la mise en pression de l'enceinte déjà conditionnée et prête à l'utilisation après son débranchement.

La mise à une pression déterminée de l'enceinte avant le lancement du programme P51 de détection de fuite a par ailleurs permis de tester l'enceinte en conditions réelles d'utilisation.

On pourrait aussi envisager un programme sans les étapes de mise en pression et d'ouverture et de fermeture de la vanne 16 d'accès à l'espace de mesure 3. Dans ce cas, l'étape de lecture et mémorisation de la première pression et de la première température est directement exécutée dès le lancement du programme de vérification de l'étanchéité.

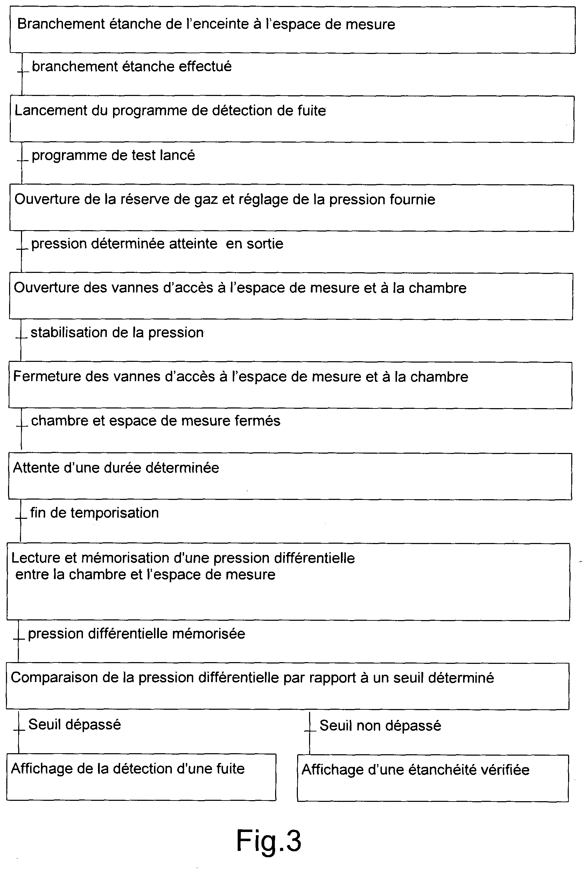

Un deuxième exemple de programme de détection d'une fuite va maintenant être décrit en relation avec la figure 3.

Avant le branchement du dispositif de vérification 1 à l'enceinte 2, les vannes 13 et 16 sont disposées en position de fermeture. L'enceinte peut alors être branchée de façon étanche à l'espace de mesure 3 au moyen d'un connecteur étanche 34.

Après que le branchement étanche de l'enceinte 2 à l'espace de mesure 3, on exécute le programme de détection de fuite P50 stocké en mémoire 11. Le lancement de ce programme P50 est par exemple réalisé par un signal de démarrage généré par l'interface 48. Ce signal de démarrage est par exemple généré par l'appui sur un bouton de démarrage ou l'appui sur une zone de démarrage d'un écran tactile.

Le lancement du programme de vérification est par exemple signifié à un utilisateur par un message affiché sur un écran ou par un bit sonore ou encore par l'illumination d'un témoin lumineux.

La mise en pression peut alors être effectuée en agissant sur le détendeur 15. Le détendeur 15 est ouvert jusqu'à ce qu'une pression déterminée soit atteinte en sortie du détendeur 15. Le capteur de pression 22 en sortie du détendeur permet un contrôle de la pression d'alimentation.

Le signal représentatif de la pression M32 en sortie du détendeur est par exemple comparé à une pression déterminée mémorisée. Lorsque la pression d'alimentation déterminée est atteinte, le dispositif de vérification émet un signal représentatif de cette pression, tel qu'un signal sonore, un signal lumineux ou bien affiche un message sur un écran.

L'actionnement du détendeur peut être réalisé par exemple manuellement.

Lorsque la pression d'alimentation est atteinte en sortie du détendeur 15, une ouverture des vannes 16 et 13 d'accès à l'espace de mesure 3 et à la chambre 12 est commandée. Cette ouverture est par exemple réalisée automatiquement par des signaux de commande C31 et C30 d'ouverture transmis par le module de traitement. 5, via ses ports 41 et 43, aux interfaces de commande des vannes 16 et 13.

Le capteur de débit 23 installé dans un passage 24 de l'espace de mesure 3 fournit un signal M33 représentatif d'un débit déterminé au module de traitement 5 via son port 44. Lorsque le débit détecté est nul, la pression dans l'espace de mesure 3 est alors stabilisée.

Après la stabilisation de la pression dans l'espace de mesure 3, la vanne 16 d'accès à l'espace de mesure 3 et la vanne 13 d'accès à la chambre 12 sont fermées. La fermeture est par exemple réalisée automatiquement par des signaux de commande C31 et C30 des vannes 16 et 13 en position fermée générés par le module de traitement 5.

Après la fermeture de l'espace de mesure 3 et de la chambre 12, une étape de temporisation d'une durée déterminée est exécutée. Cette temporisation a par exemple une durée de quelques secondes voire une durée comprise entre 10 ms et 1000 ms.

Après la temporisation, une étape de lecture de la pression différentielle entre l'espace de mesure 3 et la chambre 12 est réalisée. Les signaux M6 et M21 représentatif de la pression respectivement dans l'espace de mesure 3 et dans la chambre 12 sont par exemple stockés en mémoire puis comparés l'un à l'autre pour déterminer l'apparition ou non d'une pression différentielle.

Il est également possible d'utiliser un capteur de pression différentielle en communication avec l'espace de mesure 3 et avec la chambre 12 pour fournir directement un signal représentatif de la pression différentielle.

Après le stockage en mémoire de la pression différentielle, celle-ci est comparée à une pression seuil S26 stockée en mémoire. La pression différentielle seuil est par exemple comprise entre 0,01mbar et 0,1mbar.

En cas de dépassement du seuil le programme se termine par la transmission d'un message de détection d'une fuite.

En cas de non dépassement du seuil mémorisé, le programme se termine par la transmission d'un message de vérification de l'étanchéité. Le programme P50 comprend alors avantageusement la mise en pression de l'enceinte déjà conditionnée et prête à l'utilisation après son débranchement.

La mise à une pression déterminée de l'enceinte avant le lancement du programme P50 de détection de fuite a par ailleurs permis de tester l'enceinte en conditions réelles d'utilisation.

Un programme P55 de conditionnement de l'enceinte va maintenant être décrit. L'enceinte peut être conditionnée avant sa mise sous pression et remplie d'un gaz ou d'un mélange gazeux déterminé. L'enceinte comprend par exemple un orifice d'évacuation ouvert ou fermé par une vanne d'évacuation 52.

La vanne 52 d'évacuation est commandée ouverte ou fermée par un signal de commande C54 fournit par un port 53 relié au bus 17 du module de traitement 5.

Le module de traitement 5 comprend son programme P55 de conditionnement de l'enceinte 2 stocké en mémoire 11. Lors de l'exécution du programme P55 de conditionnement, la vanne d'évacuation 52 est par exemple ouverte, ainsi que la vanne 16 en entrée de l'espace de mesure 3. L'utilisateur peut alors ouvrir le détendeur 15 pour réaliser un balayage dans l'enceinte 2. C'est-à-dire que le gaz contenu dans l'enceinte 2 est chassé et remplacé par le gaz provenant de la réserve 14 de gaz. Le gaz stocké dans la réserve 14 est par exemple de l'azote ou un mélange gazeux sec.

Le capteur de débit 23 fournit le signal M33 représentatif du débit qui est alors reçu par le module de traitement 5 et intégré dans le temps par le programme P55 de conditionnement. La quantité totale de gaz injecté dans l'enceinte peut ainsi être calculée. Lorsqu'une quantité déterminée est atteinte, le programme de conditionnement commande la fermeture de la vanne d'évacuation 52 ainsi que la fermeture de la vanne 16 en entrée de l'espace de mesure 3. Le programme de conditionnement P55 émet par exemple un signal représentatif de la fin du conditionnement après un balayage complet dans l'enceinte.

La vanne d'évacuation 52 peut également être commandée manuellement par l'opérateur. L'opérateur ferme par exemple la vanne après émission d'un signal signifiant à l'opérateur le moment où la fermeture doit être opérée. Bien-entendu dans le cas d'une opération manuelle, la vanne d'évacuation peut être remplacée par un simple bouchon de fermeture ou d'ouverture d'un orifice d'accès à l'enceinte étanche.

Le balayage de l'enceinte permet d'éviter notamment les phénomènes de rétention d'eau et de condensation.

Par ailleurs, le programme de conditionnement p55 peut également comprendre l'acquisition du signal M6 représentatif de la pression dans l'espace de mesure traité par une fonction de vérification périodique d'un niveau de pression constant ou compris dans une plage de pression déterminée, lors du balayage. Ainsi, il est possible de s'assurer de la bonne circulation du gaz par les orifices d'accès à l'enceinte impliquant qu'il n'y a pas d'obstruction de ces orifices d'accès à l'enceinte étanche 2. Une obstruction peut par exemple résulter d'un encrassement d'un filtre disposé devant un orifice d'accès 52 ou 34, ce qui pourrait fausser les mesures de pression lors des tests d'étanchéité.

Il doit être évident pour l'homme du métier que la présente invention permet d'autres variantes de réalisation. Par conséquent, les présents modes de réalisation doivent être considérés comme illustrant l'invention.

## Revendications

1. Dispositif de vérification (1) de l'étanchéité d'une enceinte (2) sous une pression déterminée mise en communication de façon étanche avec un espace de mesure (3) fermé agencé dans le dispositif de vérification (1) qui comprend un module électronique de traitement (5) et un premier capteur (4) de pression disposé dans ledit espace de mesure (3) et adapté à transmettre au module électronique de traitement (5), par une première liaison de communication, un premier signal (M6) représentatif de la pression dans l'enceinte (2), le module électronique de traitement (5) comprenant au moins des moyens de calcul (10) et des moyens de mémorisation (11) reliés à des moyens de communication, **caractérisé en ce qu'**il comprend au moins un module de précision adapté à coopérer avec le module électronique de traitement (5) de façon a s'affanchir des variations en temperature du milieu environnant (7) lors de l'exécution d'opérations de traitement d'au moins ledit premier signal (M6) représentatif de la pression dans l'enceinte (2) et de détection d'une fuite dans l'enceinte (2), le module de précision comprenant au moins un capteur (8) de température adapté à transmettre au module de traitement (5), par une deuxième liaison de communication, un deuxième signal (M9) représentatif de la température environnante, le module de traitement (5) en coopération avec le module de précision adapté à réaliser une première mesure de pression simultanément à une première mesure de température et séparés d'un intervalle de temps déterminé d'une deuxième mesure de pression simultanément à une deuxième mesure de température associée, le module de traitement (5) en coopération avec le module de précision adapté à réaliser le traitement suivant :

$$F=(((P_2+(T_2-T_1).(P_2+K_1)/(0,5.T_1+0,5.T_2+K_2))-P_1)/\Delta t$$

où

F correspond à la valeur de la fuite exprimée en mbar/24h,
$P_1$ correspond à la première pression mesurée en mbar,
$P_2$ correspond à la deuxième pression mesurée en mbar,
$T_1$ correspond à la première température mesurée en degrés Celsius au moment de la mesure de la première pression,
$T_2$ correspond à la deuxième température mesurée en degrés Celsius au moment de la mesure de la deuxième pression,
$K_1$ et $K_2$ sont des constantes et
$\Delta t$ correspond à l'intervalle de temps entre les deux mesures de pression exprimé en secondes,

la fuite étant détectée en cas de dépassement d'un seuil (S25) de fuite déterminé stocké en mémoire.

2. Dispositif de vérification (1) selon la revendication 1, **caractérisé en ce que** le module de précision comprend au moins une chambre (12) et un deuxième capteur (20) de pression installé dans cette chambre et adapté à transmettre un troisième signal (M21) au module de traitement (5), la chambre (12) étant reliée par au moins une première vanne (13) audit espace de mesure (3) de façon à pouvoir être mis à la même pression que ladite enceinte (2) lorsque ladite première vanne (13) est en position d'ouverture, le module de traitement (5) en coopération avec le module de précision adapté à réaliser au moins une mesure différentielle des pressions mesurées par les premier et deuxième capteurs de pression (4, 20) lorsque ladite première vanne (13) est en position de fermeture pour détecter la fuite en cas de dépassement d'un seuil (S26) de pression différentielle déterminée stocké en mémoire.

3. Dispositif de vérification (1) selon la revendication 1 ou 2, **caractérisé en ce que** le module de précision comprend une réserve (14) de gaz sous pression reliée à un détendeur (15) en communication avec une deuxième vanne (16) de liaison avec ledit espace de mesure (3) et un troisième capteur de pression (22) en amont de cette deuxième vanne (16), la deuxième vanne (16) étant commandée en position fermée lorsque la pression à tester dans l'enceinte (2) est atteinte.

4. Dispositif de vérification (1) selon la revendication 3, **caractérisé en ce que** le module de précision comprend un débitmètre (23) disposé en travers d'un passage (24) réalisé dans l'espace de mesure (3) adapté à fournir au moins un signal (M33) représentatif de l'établissement d'une pression dans l'enceinte (2).

5. Dispositif de vérification (1) selon la revendication 4, **caractérisé en ce qu'**il comprend un programme (P55) de conditionnement de l'enceinte adapté à réaliser une intégration du signal (M33) fourni par le débitmètre (23) pour calculer l'injection d'un volume déterminé injecté lors d'un balayage dans l'enceinte qui comprend une vanne d'évacuation (52) mise alors en position ouverte.

6. Dispositif de vérification (1) selon la revendication 5, **caractérisé en ce que** le programme (P55) de conditionnement comprend une fonction de traitement du premier signal (M6) fourni par le premier capteur (4) et de vérification de la fluidité de la circulation lors du balayage.

7. Dispositif de vérification (1) selon l'une des revendications 1 à 6, **caractérisé en ce qu'**il se présente sous la forme d'une mallette portative.

**Patentansprüche**

1. Vorrichtung (1) zur Prüfung der Dichtigkeit eines unter einem bestimmten Druck stehenden Gehäuses (2), welches auf dichte Weise mit einem geschlossenen Messraum (3), welcher in der Prüfvorrichtung (1) eingerichtet ist, in Kommunikation gebracht wird, welche ein elektronisches Verarbeitungsmodul (5) und einen ersten Drucksensor (4) aufweist, welcher in dem genannten Messraum (3) angeordnet und dafür angepasst ist, ein erstes Signal (M6), welches für den Druck in dem Gehäuse (2) repräsentativ ist, durch eine erste Kommunikationsverbindung an das elektronische Verarbeitungsmodul (5) zu übertragen, wobei das elektronische Verarbeitungsmodul (5) zumindest Berechnungsmittel (10) und Speichermittel (11) aufweist, welche mit Kommunikationsmitteln verbunden sind, **dadurch gekennzeichnet, dass** sie mindestens ein Präzisionsmodul aufweist, welches dafür angepasst ist, um mit dem elektronischen Verarbeitungsmodul (5) derartig zusammenzuwirken, um sich von Temperaturschwankungen in der Umgebung (7) bei der Durchführung von Vorgängen zur Verarbeitung des mindestens genannten ersten Signals (M6), welches für den Druck in dem Gehäuse (2) repräsentativ ist, zu befreien und zur Erfassung eines Lecks in dem Gehäuse (2) angepasst ist, wobei das Präzisionsmodul mindestens einen Temperatursensor (8) aufweist, welcher dafür angepasst ist, um durch eine zweite Kommunikationsverbindung ein zweites Signal (M9), welches für die Umgebungstemperatur repräsentativ ist, an das Verarbeitungsmodul (5) zu übertragen, wobei das Verarbeitungsmodul (5) in Zusammenwirkung mit dem Präzisionsmodul dafür angepasst ist, eine erste Druckmessung gleichzeitig mit einer ersten Temperaturmessung durchzuführen, welche durch ein bestimmtes Zeitintervall von einer zweiten Druckmessung gleichzeitig mit einer verknüpften zweiten Temperaturmessung getrennt sind, wobei das Verarbeitungsmodul (5) in Zusammenwirkung mit dem Präzisionsmodul dafür angepasst ist, die folgende Verarbeitung durchzuführen:

$$F= (((P_2+(T_2-T_1).(P_2+K_1)/(0,5.T_1+0,5.T_2+K_2))-P_1)/\Delta t$$

wo

F dem Wert des in mbar/24h ausgedrückten Lecks entspricht,

$P_1$ dem in mbar gemessenen ersten Druck entspricht,

$P_2$ dem in mbar gemessenen zweiten Druck entspricht,

$T_1$ der ersten in dem Moment der Messung des ersten Drucks in Grad Celsius gemessenen Temperatur entspricht,

$T_2$ der zweiten in dem Moment der Messung des zweiten Drucks in Grad Celsius gemessenen Temperatur entspricht,

$K_1$ und $K_2$ Konstanten sind und

$\Delta t$ dem Zeitintervall zwischen den beiden Druckmessungen entspricht, welches in Sekunden ausgedrückt ist, wobei das Leck im Falle der Überschreitung einer bestimmten im Speicher gespeicherten Leckschwelle (S25) festgestellt wird.

2. Prüfvorrichtung (1) nach Anspruch 1, **dadurch gekennzeichnet, dass** das Präzisionsmodul mindestens eine Kammer (12) und einen zweiten Drucksensor (20) aufweist, welcher in dieser Kammer installiert und dafür angepasst ist, um ein drittes Signal (M21) an das Verarbeitungsmodul (5) zu übertragen, wobei die Kammer (12) durch mindestens ein erstes Ventil (13) mit dem genannten Messraum (3) derartig verbunden ist, um auf den gleichen Druck wie das genannte Gehäuse (2) gebracht werden zu können, wenn sich das genannte erste Ventil (13) in der Öffnungsposition befindet, wobei das Verarbeitungsmodul (5) in Zusammenarbeit mit dem Präzisionsmodul dafür angepasst ist, mindestens eine Differenzmessung der von dem ersten und zweiten Drucksensor (4, 20) gemessenen Drücke auszuführen, wenn sich das genannte erste Ventil (13) in der Schließposition befindet, um das Leck im Falle der Überschreitung einer Schwelle (S26) von im Speicher gespeichertem bestimmtem Differenzdruck festzustellen.

3. Prüfvorrichtung (1) nach Anspruch 1 oder 2, **dadurch gekennzeichnet, dass** das Präzisionsmodul einen Tank (14) von unter Druck stehendem Gas, welcher mit einem Druckminderer (15) in Kommunikation mit einem zweiten Ventil (16) zur Verbindung mit dem genannten Messraum (3) verbunden ist, und einen dritten Drucksensor (22) stromaufwärts von dem zweiten Ventil (16) aufweist, wobei das zweite Ventil (16) in die geschlossene Position gesteuert wird, wenn der zu testende Druck in dem Gehäuse (2) erreicht ist.

4. Prüfvorrichtung (1) nach Anspruch 3, **dadurch gekennzeichnet, dass** das Präzisionsmodul einen Durchflussmesser (23) aufweist, welcher in einem in dem Messraum (3) ausgeführten Durchgang (24) angeordnet ist, welcher dafür angepasst ist, mindestens ein Signal (M33) bereitzustellen, welches für die Einrichtung eines Drucks in dem Gehäuse (2) repräsentativ ist.

5. Prüfvorrichtung (1) nach Anspruch 4, **dadurch gekennzeichnet, dass** sie ein Programm (P55) zur Konditionierung des Gehäuses umfasst, welches dafür angepasst ist, um eine Integration des von dem Durchflussmesser (23) bereitgestellten Signals (M33) auszuführen, um die Einspritzung eines bestimmten, bei einer Abtastung in das Gehäuse eingespritzten Volumens zu berechnen, welches ein nun in die offene Position gebrachtes Abführventil (52) aufweist.

6. Prüfvorrichtung (1) nach Anspruch 5, **dadurch gekennzeichnet, dass** das Konditionierungsprogramm (P55) eine Funktion zur Verarbeitung des von dem ersten Sensor (4) bereitgestellten ersten Signals (M6) und zur Prüfung der Fließfähigkeit des Kreislaufs bei der Abtastung aufweist.

7. Prüfvorrichtung (1) nach einem der Ansprüche 1 bis 6, **dadurch gekennzeichnet, dass** sie sich in der Form eines tragbaren Handkoffers darstellt.

**Claims**

1. Device (1) to verify the air and water-tightness of an enclosure (2) at a predetermined pressure made to communicate in a sealed manner with a closed measurement space (3) arranged in the verification device (1) that comprises an electronic processing module (5) and a first pressure sensor (4) arranged in said measurement space (3) and able to transmit to the electronic processing module (5), by a first communication link, a first signal (M6) representative of the pressure in the enclosure (2), the electronic processing module (5) comprising at least calculations means (10) and memorization means (11) linked to communication means, wherein it comprises at least one precision module able to cooperate with the electronic processing module (5) so as to overcome the temperature variation of the surrounding environment (7) during the performance of processing operations of at least the first signal (M6) representative of the pressure in the enclosure (2) and of the detection of a leak in the enclosure (2), the precision module comprising at least one temperature sensor (8) able to transmit to the processing module (5), by a second communication link, a second signal (M9) representative of the surrounding temperature, the processing module (5) in cooperation with the precision module able to perform a first pressure measurement simultaneously with a first temperature measurement and separated by a predetermined time lapse from a second pressure measurement simultaneously with a second associated temperature measurement, the processing module (5) in cooperation with the precision module able to perform the following processing:

$$F = (((P_2 + (T_2 - T_1).(P_2 + K_1)/(0.5.T_1 + 0.5.T_2 + K_2)) - P_1)/\Delta t$$

where

F corresponds to the value of a leak expressed in mbar/24h,

$P_1$ corresponds to the first pressure measured in mbar,

$P_2$ corresponds to the second pressure measured in mbar,

$T_1$ corresponds to the first temperature measured in degrees Celsius at the measurement time of the first pressure,

$T_2$ corresponds to the second temperature measured in degrees Celsius at the measurement time of the second pressure,

$K_1$ and $K_2$ are constants and

$\Delta t$ corresponds to the time lapse between the two pressure measurements expressed in seconds,

the leak being detected when a predetermined leak threshold (S25) stored in the memory is exceeded.

2. Verification device (1) according to Claim 1, wherein the precision module comprises at least one chamber (22) and a second pressure sensor (20) installed in this chamber and able to transmit a third signal (M21) to the processing module (5), the chamber (12) being linked by at least a first valve (13) to said measurement space (3) so as to be able to be put at the same pressure as said enclosure (2) when said first valve (13) is in the open position, the processing module (5) in cooperation with the precision module able to perform at least one differential measurement of the pressures measured by the first and second pressure sensors (4, 20) when said first valve (13) is in the closed position to detect a leak in the event of a predetermined differential pressure threshold (S26) stored in the memory being exceeded.

3. Verification device (1) according to Claims 1 or 2, wherein the precision module comprises a pressurized gas reserve (14) linked to a pressure reducing valve (15) in communication with a second valve (16) linked to said measurement space (3) and a third pressure sensor (22) upstream of this second valve (16), the second valve (16) being controlled in the closed position when the pressure to be tested in the enclosure (2) has been reached.

4. Verification device (1) according to Claim 3, wherein the precision module comprises a flow sensor (23) arranged through a passage (24) made in the measurement space (3) able to supply at least one signal (M33) representative of the establishment of a pressure in the enclosure (2).

5. Verification device (1) according to Claim 4, wherein it comprises a programme (55) to process the enclosure able to perform an integration of the signal (M33) supplied by the flow sensor (23) to calculate the injection of a predetermined volume injected during a scanning in the enclosure, which comprises a discharge valve (52) set to the open position.

6. Verification device (1) according to Claim 5, wherein the processing programme (P55) comprises a function to process the first signal (M6) supplied by the first sensor (4) and to verify the fluidity of the flow during the scanning.

7. Verification device (1) according to one of Claims 1 to 6, wherein it is in the form of a portable case.

Fig.1

| Branchement étanche de l'enceinte à l'espace de mesure |
|---|

↓ branchement étanche effectué

| Lancement du programme de détection de fuite |
|---|

↓ programme de test lancé

| Ouverture de la réserve de gaz et réglage de la pression fournie |
|---|

↓ pression déterminée atteinte en sortie

| Ouverture de la vanne d'accès à l'espace de mesure |
|---|

↓ stabilisation de la pression

| Fermeture de la vanne d'accès à l'espace de mesure |
|---|

↓ espace de mesure fermé

| Lecture et mémorisation simultanée de la pression et de la température dans l'espace de mesure |
|---|

↓ 1ère pression et 1ère température mémorisées

| Attente d'une durée déterminée |
|---|

↓ fin de temporisation

| Lecture et mémorisation simultanée de la pression et de la température dans l'espace de mesure |
|---|

↓ 2ème pression et 2ème température mémorisées

| Calcul du taux de fuite |
|---|

↓ mémorisation d'un taux de fuite calculé

| Comparaison du taux calculé par rapport à un seuil déterminé |
|---|

↓ Seuil dépassé      ↓ Seuil non dépassé

| Affichage de la détection d'une fuite | Affichage d'une étanchéité vérifiée |
|---|---|

# Fig.2

Branchement étanche de l'enceinte à l'espace de mesure

⊥ branchement étanche effectué

Lancement du programme de détection de fuite

⊥ programme de test lancé

Ouverture de la réserve de gaz et réglage de la pression fournie

⊥ pression déterminée atteinte en sortie

Ouverture des vannes d'accès à l'espace de mesure et à la chambre

⊥ stabilisation de la pression

Fermeture des vannes d'accès à l'espace de mesure et à la chambre

⊥ chambre et espace de mesure fermés

Attente d'une durée déterminée

⊥ fin de temporisation

Lecture et mémorisation d'une pression différentielle
entre la chambre et l'espace de mesure

⊥ pression différentielle mémorisée

Comparaison de la pression différentielle par rapport à un seuil déterminé

⊥ Seuil dépassé          ⊥ Seuil non dépassé

Affichage de la détection d'une fuite      Affichage d'une étanchéité vérifiée

# Fig.3

**EP 3 241 008 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1643230 A
- FR 2628529
- FR 2136747
- WO 2010134622 A
- US 6182501 B
- US 4462249 A